# EUROPEAN PATENT SPECIFICATION

(11) **EP 3 492 736 B1**
(45) Date of publication and mention of the grant of the patent: **30.12.2020**
(21) Application number: 17382831.0
(22) Date of filing: 04.12.2017
(51) Int. Cl.: F03D 13/20, E04H 12/08, E04H 12/20

(54) **COUPLING SYSTEM FOR STRUTS TO A CENTRAL TOWER OF A WIND TURBINE AND A WIND TURBINE TOWER**
KOPPLUNGSSYSTEM FÜR STREBEN AN EINEM ZENTRALEN TURM EINER WINDTURBINE UND WINDTURBINENTURM
SYSTÈME DE COUPLAGE D'ENTRETOISES À UNE TOUR CENTRALE D'UNE TURBINE ÉOLIENNE ET TOUR DE TURBINE ÉOLIENNE

(43) Date of publication of application: 05.06.2019
(73) Proprietor: GRI Renewable Industries, S.L., 28045 Madrid (ES)
(72) Inventor: GALLARDO HERNANDEZ, Rodrigo, 28045 MADRID (ES); OGANDO GONZALEZ, Alberto, 28045 MADRID (ES)
(74) Representative: Ungria López, Javier

(56) References cited:
- EP-A1- 2 846 040
- EP-A1- 3 139 037
- WO-A1-2017/045993
- WO-A1-2017/182349
- DE-A1-102014 114 472

## Description

### Object of the invention

The present invention relates to a system for joining the buttress elements and the main shaft of a wind turbine tower, said joining system comprising a fastening structure located on the joining ring to receive and fasten the buttress element, such that the fastening structure is integrated in the joining ring and extends at least towards the inside thereof such that no element of the joining ring protrudes. It further comprises at least one joining element in the main shaft that receives struts that join the buttress elements to the main shaft from an elbow located in the buttress elements.

### Technical problem to be solved and background of the invention

Many concepts have been proposed to make high towers viable for the wind power market, high towers being considered those which have a height that exceeds 100 meters.

These solutions suggest using concrete to make the projects viable, but many of the solutions proposed are theoretical and are proven unfeasible in the course of implementation.

A number of solutions have been proposed in the offshore maritime wind turbine sector linked to submerged lattice structures that comprise a central body and several buttress elements that run parallel to the central body up to a point where they come into connect with the central body.

The buttress elements of said lattice structures come into contact with the central body of the tower at a special ring (joining piece) that has elements for receiving the buttress elements, such that in addition to receiving the buttress elements, it fastens them to the central body.

The central body of said towers for wind generators is made up of rings that overlap one another to form the tower.

Similarly, the buttress elements have a circular cross section and they have a wedge-shaped end in order to come into contact with the central body, which facilitates contact of the buttress element with the central body.

Document EP 2 647 764 A1 describes a well-known connecting piece of the type to which the invention relates, wherein the central piece made up of two halves and which has a plurality of internal stiffeners in turn has connecting structures of arms made up of a structure of welded straight metal sheets and another plurality of pieces that cause the pieces of structure to project from the connecting piece and which make the manufacture thereof complex.

Document DE 10 2006 056 274 B4, which discloses a tower of a wind turbine comprising a base in the form of a lattice tower with at least three corner posts and an upper portion in the shape of a tubular tower with a substantially round cross-section, is also well known. Here in the transition region of the upper terminal portion of the lattice tower it is connected by means of a transition body to the upper terminal portion of the tubular tower. The transition body is constructed in the form of a truncated cone, wherein the corner posts extend in the transition region and are partially connected in the transition area between the upper terminal region of the lattice tower and the bottom area of the tubular tower with the truncated cone.

Document EP 2333163 A1 describes a deep sea offshore structure comprising a base structure with columns and a transition piece with the tower in order to mount wind turbine. The transition piece is cylindrical and has the welded outer surface plates thereof engaged in slots of the columns of the base structure.

Document WO 2011/070 325 A2 describes a connector between the mast and the top portion of a grid-like base structure. The connector comprises a cylinder and a spatial box girder. The box girder is situated on the top portion of the foundation structure. The box girder has vertical side walls that are welded to the main struts and the cylinder.

Document DE 20 2009 018 011 U1 discloses a wind turbine with three tubular foundation towers, which consist of individual tower segments. An intermediate platform is fixed at the top of the foundation towers. The mast of the tower is arranged on the intermediate platform. The mast of the tower is stabilized by brackets.

Document DE 20 2004 006 633 U1 shows a connector that connects the mast tower to the lattice mast. The connector has claws in the main struts of the lattice mast. The brackets are connected by cantilevers to the cylinder. The cylinder comprises the upper and lower end of a respective end plate, which is open in the center to ensure access to the inside of the mast tower.

Document US2013/287322 A1 is also known, which discloses a transition structure between two structures of adjacent wind turbine towers. The transition structure can include a plurality of vertical legs separated from one another, an end section placed between an upper portion of the tower and a lower portion of the tower, a plurality of connecting members, wherein each connecting member connects one of the vertical legs to the end section, and at least one torque plate placed between the plurality of vertical legs and the end section.

Finally, document WO2017/182349 discloses a system for joining buttress elements to the main shaft of a wind turbine tower, having the features of the preamble of claim 1.

All towers with buttress elements are designed with a type of joining piece that is highly complex to manufacture and assemble. In addition, the buttress elements of this type of tower produce very important local stresses in their connection to the main shaft, both in the main shaft and in the buttress elements themselves, which requires the joints of the buttress elements to the main shaft to be locally stiffened, involving extra cost and the technical complexity of implementing said reinforcement.

However, none of these documents discloses a system for joining the buttress elements and the main shaft of a tower for a wind generator that confers the manufacturing ease provided by the system object of the invention or the ease in joining the buttress elements to the main shaft along with the viability thereof proposed, not only in terms of manufacturing, but also during the life cycle of the entire tower, including transportation, assembly, maintenance and final decommissioning of the same.

### Description of the invention

The present invention relates to a system for joining buttress elements to the main shaft of a wind turbine tower wherein the main shaft is made up of rings and comprises an upper joining ring and a lower joining ring. Moreover, each buttress element comprises an end support piece with a flat end.

In the system object of the invention the upper joining ring comprises a first perimeter surface and a first support surface that forms an angle with the first perimeter surface; the lower joining ring comprises a second perimeter surface and a second support surface situated parallel to the first support surface of the upper joining ring and thus forms an angle with the second perimeter surface of an identical value to the angle of the first support surface with the first perimeter surface.

In the system for joining buttress elements to the main shaft of a wind turbine tower the flat end of each buttress element is fastened between the first support surface of the upper joining ring and the second support surface of the lower joining ring, and the angle has a value comprised between 60° and 120°.

In the system for joining buttress elements to the main shaft of a wind turbine tower object of the invention the first support surface of the upper ring comprises a perimeter projection, which contributes to distributing the stresses generated in the support of the flat end of the buttress element on the upper joining ring.

In the system for joining buttress elements to the main shaft of a wind turbine tower object of the invention, the end support piece of the buttress elements is configured to change the orientation of the buttress element until the flat end is parallel to the support surfaces of the upper and lower joining rings.

The system for joining buttress elements to the main shaft of a wind turbine tower object of the invention comprises a first bolt joining the buttress element buttress elements to the lower ring.

Moreover, the system for joining buttress elements to the main shaft of a wind turbine tower comprises a second bolt joining the upper ring to the lower ring.

In the system for joining buttress elements to the main shaft of a wind turbine tower the second support surface of the lower joining ring comprises a first through hole and the flat end of the buttress element comprises a first through hole, wherein the first through holes house the first bolt that joins the flat end of the buttress element to the lower joining ring and, furthermore, the first support surface comprises a second through hole, the flat end of the buttress element comprises a second through hole and the second support surface comprises a second through hole, wherein the second through holes house a second bolt that joins the upper joining ring to the lower joining ring with the flat end of the buttress element between the two joining rings.

In the system for joining buttress elements to the main shaft of a wind turbine tower object of the invention the flat end of each buttress element comprises a recess for housing one end of the first bolt.

The system for joining buttress elements to the main shaft of a wind turbine tower object of the invention comprises complementary pieces located between the upper joining ring and the lower joining ring, located in hollow spaces between the flat ends of the buttress elements.

Each complementary piece of the system for joining buttress elements to the main shaft of a wind turbine tower comprises a first through hole configured to house a first bolt that joins the complementary piece to the lower ring and a second through hole configured to house a second bolt that joins the upper ring to the lower ring with a complementary piece between said rings.

In the system for joining buttress elements to the main shaft of a wind turbine tower object of the invention, the buttress elements comprise an elbow configured to change the orientation of the buttress element from a position parallel to the main shaft to a position in which an end section of the buttress element is joined at one end to the main shaft.

The system for joining buttress elements to the main shaft of a wind turbine tower object of the invention comprises at least one intermediate joining element, such as a flange, located on the main shaft, configured to join the buttress elements to the main shaft by means of at least one strut per buttress element, such that the buttress elements are joined to the main shaft by means of struts that join the elbows with the at least one intermediate joining element.

Each elbow of the system for joining buttress elements to the main shaft of a wind turbine tower object of the invention comprises an upper ring for joining the end section of the buttress element, a stiffener in the inside thereof and an outer plate located in correspondence with the stiffener, such that the outer plate receives the struts.

In the system for joining buttress elements to the main shaft of a wind turbine tower object of the invention, the struts comprise a main beam and two reinforcement beams.

The main beam of each strut comprises a first flat end configured to be fastened to the elbow and a second end comprising a circumference sector, which is joined to the at least one intermediate joining element.

The system for joining buttress elements to the main shaft of a wind turbine tower object of the invention comprises two fastening plates that cover both the outer plate of the elbow and the flat end of the main beam.

Another object of the invention is a wind turbine tower comprising a main shaft and a plurality of buttress elements that comprise the system for joining buttress elements to the main shaft defined previously.

### Description of the figures

To complete the description, and for the purpose of helping to make the characteristics of the invention more readily understandable, the present specification is accompanied by a set of figures constituting an integral part of the same, which by way of illustration and not limitation represent the following:

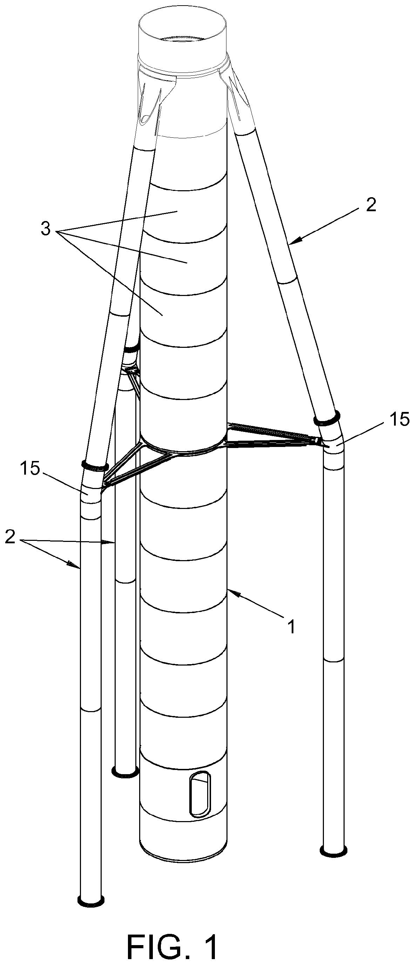

Figure 1 shows a perspective view of a wind turbine tower with the joining system object of the invention.

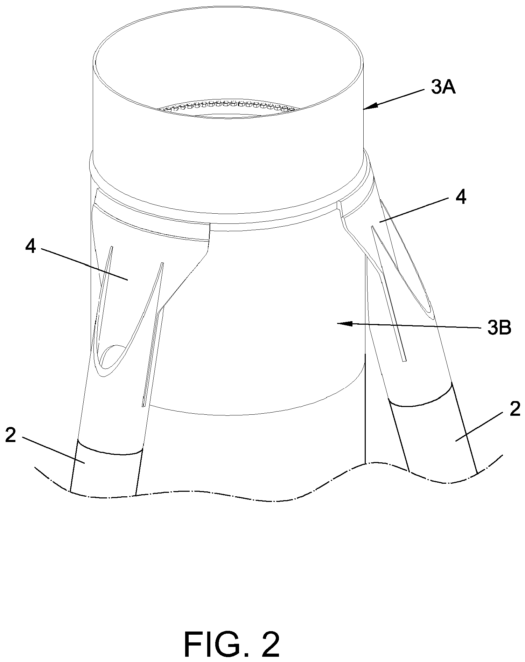

Figure 2 shows a perspective view and a detailed view with a detailed cross section of the joining area of the main shaft and the buttress elements.

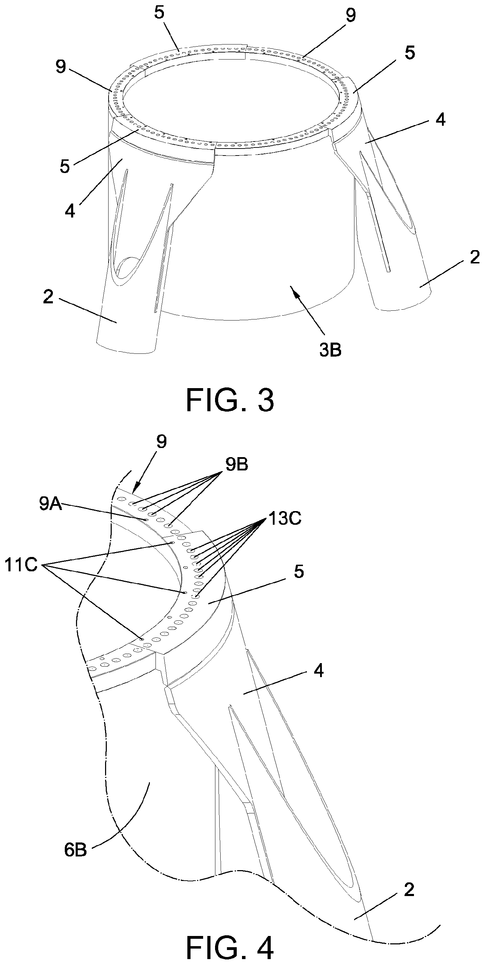

Figure 3 shows a perspective view similar to figure 2, the upper joining ring having been removed.
Figure 4 shows a detailed view of figure 3.

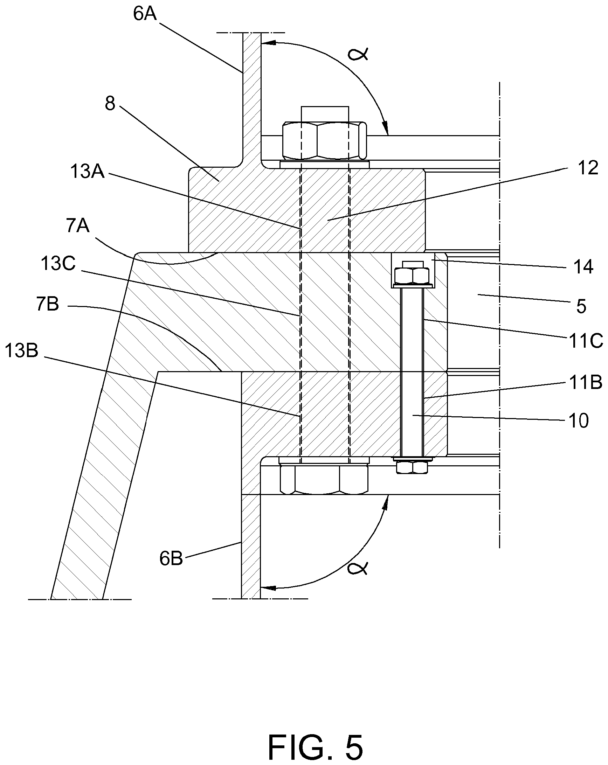

Figure 5 shows a detailed view of the joint between the upper and lower joining rings with the flat end between them, showing the through holes and the bolts used in the joint, according to the preferred embodiment of the invention.

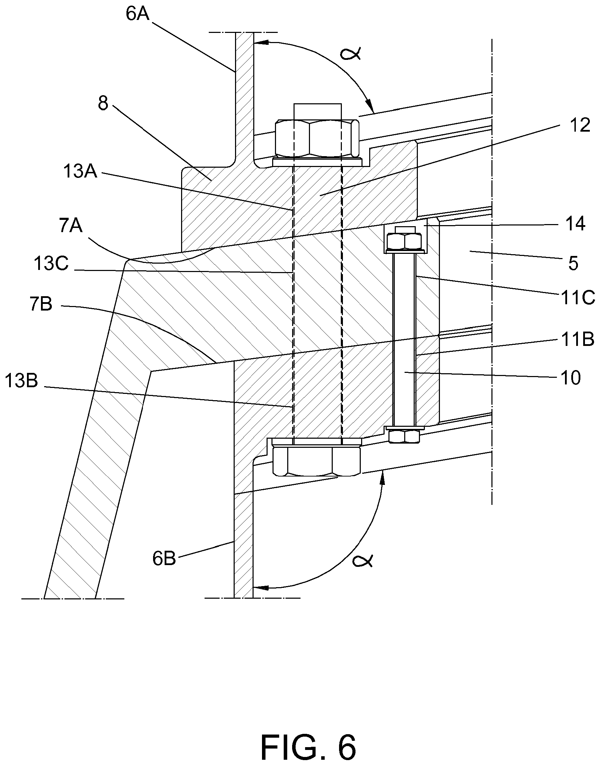

Figure 6 shows a detailed view of the preferred embodiment of the invention, showing the joint between the upper and lower joining rings with the flat end between them, showing the through holes and the bolts used in the joint, similar to figure 5, but wherein the support surfaces are not perpendicular to the perimeter surfaces.

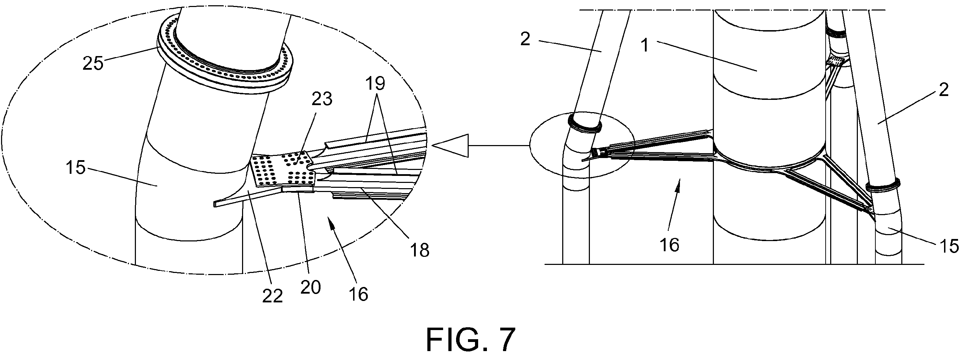

Figure 7 shows a perspective view of the wind turbine tower showing the joint between the elbows and the joining elements by means of struts and shows a detailed view of the fastening of each elbow to the two struts.

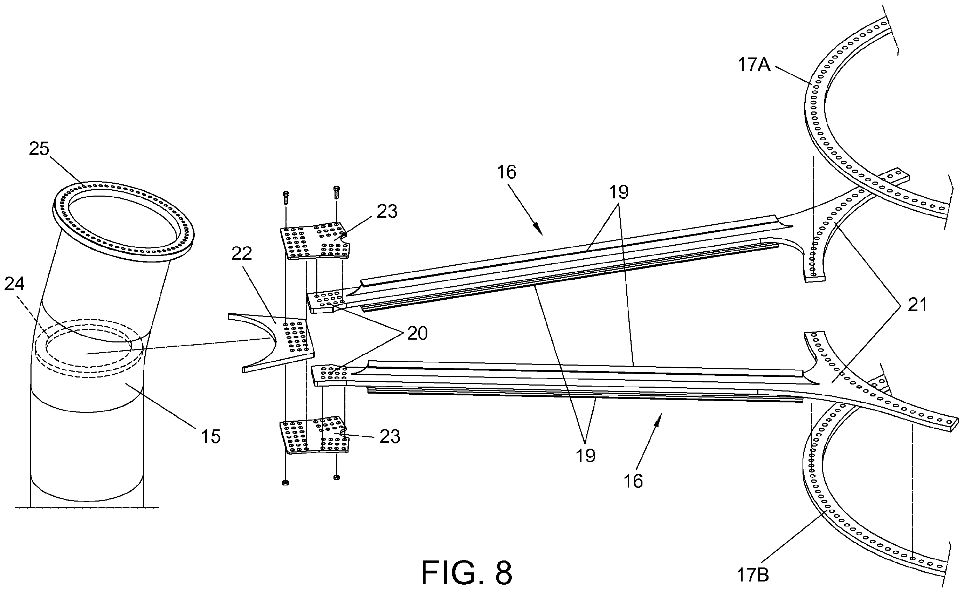

Figure 8 shows an exploded view of the joint between elbows and joining elements and the elements of the struts.

Below is a list of the different elements shown in the figures that are included in the invention:
1.- main shaft,
2.- buttress elements,
3.- rings,
3A.- upper joining ring,
3B.- lower joining ring,
4.- end support piece,
5.- flat end of the end support piece,
6A.- first perimeter surface,
6B.- second perimeter surface,
7A.- first support surface,
7B.- second support surface,
8.- perimeter projection,
9.- complementary pieces,
9A.- first through hole of the complementary piece,
9B.- second through hole of the complementary piece,
10.- first bolt,
11B.- first through hole of the lower joining ring,
11C.- first through hole of the flat end of the end support piece of the buttress element,
12.- second bolt,
13A.- second through hole of the support surface of the upper ring,
13B.- second through hole of the support surface of the lower ring,
13C.- second through hole of the flat end of the buttress element,
14.- recess,
15.- elbow;
16.- strut;
17A, 17B.- intermediate joining elements,
18.- main beam,
19.- reinforcement beam,
20.- flat end,
21.- circumference sector,
22.- outer plate,
23.- fastening plate,
24.- stiffener,
25.- upper ring,
α.- angle

### Detailed description of an embodiment of the invention

First of all, it should be noted that when wind turbine towers are significantly high, they are made up of a main shaft (1) and several buttress elements (2), which are joined to the main shaft (1) at one end of the buttress elements (2), by means of the system object of the invention. In addition, given the height of the towers, the buttress elements (2) are also joined to the main shaft (1) on at least one intermediate point of the main shaft (1).

The main shaft (1) is made up of rings (3) that are located on one another to form said main shaft (1).

The present invention relates to a system for joining buttress elements (2) to the main shaft (1) of a wind turbine tower, such that the main shaft (1) comprises an upper joining ring (3A) and a lower joining ring (3B) in a way that between the upper joining ring (3A) and the lower joining ring (3B) the buttress elements (2) are fastened at one end of the same.

The buttress elements (2) comprise an end support piece (4) such that said end support piece (4) comprises a flat end (5), the flat end (5) being the element of the buttress elements (2) that is situated between the upper joining ring (3A) and the lower joining ring (3B) and it is fastened to the same.

The lower joining element (3B) comprises a second perimeter surface (6B) that in the preferred embodiment of the invention is cylindrical, and an end with a second support surface (7B) configured to receive the flat end (5) of the buttress elements (2). The second support surface (7B) forms an angle (α) with respect to the second perimeter surface (6B), the value of said first angle (α) being between 60° and 120°, that value of said angle (α) being 90° in the preferred embodiment of the invention, in other words, the second support surface (7B) is perpendicular to the second perimeter surface (6B) of the lower joining ring (3B).

In a similar configuration, the upper joining ring (3A) comprises a first perimeter surface (6A), which in the preferred embodiment of the invention is cylindrical, and an end with a second support surface (7A) configured to receive the flat end (5) of the buttress elements (2). The first support surface (7A) is facing the second support surface (7B) of the lower joining ring (3B) and therefore the spatial position thereof is identical to the second support surface (7B) of the lower joining ring (3B), in other words, the first support surface (7A) of the upper joining ring (3A) forms the same angle (α) with respect to the first perimeter surface (6A), the value of said angle (α) being between 60° and 120° and in the preferred embodiment of the invention the value of the angle (α) being 90°, in other words, the first support surface (7A) of the upper joining ring (3A) is perpendicular to the first perimeter surface (6A) of the upper joining ring (3A).

In the preferred embodiment of the invention, the first support surface (7A) of the upper ring (3A) comprises a perimeter projection (8) that projects from the first perimeter surface (6A) of the aforementioned upper ring (3A) in such a way that the stresses generated in the support of the flat end (5) of each buttress element (2) on the perimeter projection (8) is distributed over a greater surface than if the perimeter projection (8) were not there. With the configuration herein explained, the perimeter projection (8) improves the distribution of the stresses generated in the support of the buttress element (2) on the upper ring (3A).

The end support piece (4) of the buttress elements (2) changes the orientation of the buttress element (2), since the flat end (5) of the same is located between the first support surface (7A) of the upper joining ring (3A) and the second support surface (7B) of the lower joining ring (3B), and therefore the flat end (5) in the preferred embodiment of the invention is perpendicular to the perimeter surface (6A, 6B) of the upper (3A) and lower (3B) joining rings (3A), but furthermore, it does not have to be perpendicular and may form an angle (α) with the aforementioned perimeter surface (6A, 6B), and the value of said angle (α) coinciding with that of the angle (α) formed by the support surfaces (7A, 7B) with the aforementioned perimeter surface (6A, 6B), in other words it is between 60° and 120°.

The preferred embodiment of the invention has three buttress elements (2) joined to the main shaft (1) of the tower, and the flat end (5) of the buttress elements (2) has an extension that covers a sixth portion of the circumference of the aforementioned main shaft (1), and thus, the system object of the invention comprises complementary pieces (9) located in the spaces between the flat ends (5) of the three buttress elements (2) situated between the upper joining ring (3A) and the lower joining ring (3B).

To fasten the flat end (5) of the buttress element (2) both to the upper joining ring (3A) and to the lower joining ring (3B), the system object of the invention uses bolts, distributed as explained below:
- a first bolt (10) joining the buttress element (2) to the lower ring (3B), such that the first bolt (10) passes through a first through hole (11B) of the second support surface (7B) of the lower ring (3B) and a first through hole (11C) of the flat end (5) of the buttress element (2),
- a second bolt (12) joining the upper ring (3A) to the lower ring (3B) with the flat end (5) of the buttress element (2) between the upper ring (3A) and the lower ring (3B), such that the second bolt (12) passes through a second through hole (13A) of the first support surface (7A) of the upper ring (3A), a second through hole (13C) of the flat end (5) of the buttress element (2) and a second through hole (13B) of the lower ring (3B).

The complementary pieces (9) located in the spaces between the flat ends (5) of the three buttress elements (2) situated between the upper joining ring (3A) and the lower joining ring (3B) also comprise at least a first through hole (9A) configured to house a first bolt (10) in such a way that said first bolt (10) joins the complementary piece (9) to the lower ring (3B), and furthermore, the complementary pieces (9) also correspond to at least a second through hole (9B), the function of which is similar to the second through hole (13C) of the flat end (5) of the buttress element (2) so that it houses a second bolt (12) joining the upper ring (3A) to the lower ring (3B) with the complementary piece (9) between said rings (3A, 3B).

The flat end (5) of the buttress element (2) comprises a recess (14) to house an end of the first bolt (10) and which does not interfere with the first support surface (7A) of the upper ring (3A).

The buttress elements (2) of the tower have a first section running parallel to the main shaft (1) and an end section in which they change orientation and move closer to one another until they come into contact with the main shaft (1) between the upper joining ring (3A) and the lower joining ring (3B). In order to change the orientation of the buttress elements (2), said buttress elements (2) incorporate an elbow (15) configured to change the orientation of the buttress element (2) from a position parallel to the main shaft (1) to a position in which the end support piece (4) of the buttress element is joined to the main shaft (1) between the upper joining ring (3A) and the lower joining ring (3B).

The buttress elements (2) are additionally joined to the main shaft (1) by means of struts (16), which in the preferred embodiment of the invention are two struts (16) for each buttress element (2).

The joining system object of the invention comprises two intermediate joining elements (17A, 17B) located on the main shaft (1) in order to receive the struts (16), such that the struts (16) are fastened at one end between the two intermediate joining elements (17A, 17B).

The struts (16) that join the elbows (15) to the intermediate joining elements (17A, 17B) comprise a main beam (18) and two reinforcement beams (19) located on both sides of the main beam (18). The main beam (18) comprises a flat end (20) configured to come into contact with the elbow (15) and an opposite end comprising a circumference sector (21), which is introduced between the two intermediate joining elements (17A, 17B).

In the preferred embodiment of the invention, wherein three buttress elements (2) are joined to the main shaft (1) and each buttress element (2) is joined by means of two struts (16) to the aforementioned main shaft (1), the circumference sector (21) of the end of the main beam (18) is shaped like a sixth portion of an entire circumference, such that the six struts (16) between the two intermediate joining elements (17A, 17B) form an entire circumference.

In order to facilitate the fastening of the struts (16) to the elbow (15), each elbow (15) comprises an outer plate (22) wherein the flat ends (20) of the main beams (18) of two struts (16) are fastened by means of two fastening plates (23) that cover both the plate (23) of the elbow (15) and the flat end (20) of the main beam (18). Each elbow (15) comprises a stiffener (24) located inside the elbow (15) in correspondence with the plate (23) of the elbow (15), which contributes to receiving the stresses that the struts (16) transmit to the elbow (15) and vice versa.

By means of the joining system object of the invention, stress distribution is generated with the joining rings (3A, 3B), the upper joining elements (13a, 13b), the main shaft (1) and the buttress elements (2), wherein the momentum generated at the end of the tower is transformed into axial stress that is distributed by the buttress elements (2). This distribution of stresses by means of a lattice addresses the problem of the possible local buckling in the diagonals, which is prevented with the joining system object of the invention, due to the connections between the buttress elements (2) and the main shaft (1).

Lastly, in order to join the upper section of the buttress elements (2) to the elbows (15), the aforementioned elbows (15) comprise an upper ring (25) where the upper portion of the buttress elements (2) rests.

Another object of the invention is a wind turbine tower comprising a main shaft (1) and a plurality of buttress elements (2) such that the tower comprises the system for joining buttress elements (2) to the main shaft (1) defined throughout this description.

The invention is not intended to be limited to the specific embodiment described in this document. Those skilled in the art may develop other embodiments in light of the description made herein. As such, the scope of the invention is defined by the following claims.

## Claims

1. A system for joining buttress elements (2) to the main shaft (1) of a wind turbine tower, wherein:
- the main shaft (1) is made up of rings (3);
- the main shaft (1) comprises an upper joining ring (3A) and a lower joining ring (3B);
- each buttress element (2) comprises an end support piece (4) with a flat end (5);
- the upper joining ring (3A) comprises a first perimeter surface (6A) and a first support surface (7A) that forms an angle (α) with the first perimeter surface (6A); and
- the lower joining ring (3B) comprises a second perimeter surface (6B) and a second support surface (7B) parallel to the first support surface (7A) of the upper joining ring (3A) such that it forms an angle (α) with the second perimeter surface (6B) of identical value to the angle (α) of the first support surface (7A) with the first perimeter surface (6A); such that the flat end (5) of each buttress element (2) is fastened between the first support surface (7A) of the upper joining ring (3A) and the second support surface (7B) of the lower joining ring (3B), and wherein the angle (α) has a value comprised between 60° and 120°;
- the second support surface (7B) of the lower joining ring (3B) comprising a first through hole (11B) and the flat end (5) of the buttress element (2) comprises a first through hole (11C) wherein the first through holes (11B, 11C) house a first bolt (10) that joins the flat end (5) of the buttress element (2) to the lower joining ring (3B);
- the first support surface (7A) of the upper ring (3A) comprising a second through hole (13A), the flat end (5) of the buttress element (2) comprises a second through hole (13C) and the lower joining ring (3B) comprises a second through hole (13B), wherein the second through holes (13A, 13B, 13C) house a second bolt (12) that joins the upper joining ring (3A) to the lower joining ring (3B) with the flat end (5) of the buttress element (2) between the two joining rings (3A, 3B);
**characterized in that:**
- the first through holes (11B, 11C) being located inside the perimeter of both the first perimeter surface (6A) and the second perimeter surface (6B); and
- the second through holes (13A, 13B, 13C) being located inside the perimeter of both the first perimeter surface (6A) and the second perimeter surface (6B).

2. The system for joining buttress elements (2) to the main shaft (1) of a wind turbine tower, according to claim 1, **characterized in that** the first support surface (7A) of the upper ring (3A) comprises a perimeter projection (8).

3. The system for joining buttress elements (2) to the main shaft (1) of a wind turbine tower according to any of the preceding claims, **characterized in that** the end support piece (4) of the buttress elements (2) is configured to change the orientation of the buttress element (2) until the flat end (5) is parallel to the support surfaces (7A, 7B) of the upper (3A) and lower (3B) joining rings.

4. The system for joining buttress elements (2) to the main shaft (1) of a wind turbine tower according to claim 1, **characterized in that** the flat end (5) of each buttress element (2) comprises a recess (14) to house an end of the first bolt (10).

5. The system for joining buttress elements (2) to the main shaft (1) of a wind turbine tower according to any of the preceding claims, **characterized in that** it comprises complementary pieces (9) located between the upper joining ring (3A) and the lower joining ring (3B) in hollow spaces between the flat ends (5) of the buttress elements (2).

6. The system for joining buttress elements (2) to the main shaft (1) of a wind turbine tower, according to claim 5, **characterized in that** each complementary piece (9) comprises:
- a first through hole (9A) configured to house a first bolt (10) that joins the complementary piece (9) to the lower ring (3B); and
- a second through hole (9B) configured to house a second bolt (12) that joins the upper ring (3A) to the lower ring (3B) with a complementary piece (9) between said rings (3A, 3B).

7. The system for joining buttress elements (2) to the main shaft (1) of a wind turbine tower, according to any of claims 1 to 6, **characterized in that**:
- the buttress elements (2) comprise an elbow (15) configured to change the orientation of the buttress element (2) from a position parallel to the main shaft (1) to a position in which an end section of the buttress element (2) is joined at one end to the main shaft (1).
- it comprises at least one intermediate joining element (17A, 17B) located in the main shaft (1), configured to join the buttress elements (2) to the main shaft (1) by means of at least one strut (16) per buttress element (2); wherein the buttress elements (2) are joined to the main shaft (1) by means of the struts (16) that join the elbows (15) to the at least one intermediate joining element (17A, 17B).

8. The system for joining buttress elements (2) to the main shaft (1) of a wind turbine tower, according to claim 7, **characterized in** the elbow (15) comprises:
- an upper ring (25) for joining the end section of the buttress element (2).
- a stiffener (24) in the inside thereof, and
- an outer plate (22) located in correspondence with the stiffener (24),
- such that the outer plate (22) receives the struts (16).

9. The system for joining buttress elements (2) to the main shaft (1) of a wind turbine tower, according to claim 8, **characterized in that** the struts (16) comprise a main beam (18) and two reinforcement beams (19).

10. The system for joining buttress elements (2) to the main shaft (1) of a wind turbine tower, according to claim 9, **characterized in that** the main beam (18) comprises:
- a first flat end (20) configured to be fastened to the elbow (15); and,
- a second end comprising a circumference section (21), which is joined to the at least one intermediate joining element (17A, 17B).

11. The system for joining buttress elements (2) to the main shaft (1) of a wind turbine tower, according to claims 6 to 10, **characterized in that** it comprises two fastening plates (23) that cover both the outer plate (22) of the elbow (15) and the flat end (20) of the main beam (18).

12. A wind turbine tower comprising a main shaft (1) and a plurality of buttress elements (2), **characterized in that** it comprises the system for joining buttress elements (2) to the main shaft (1) defined in any one of the preceding claims.

## Patentansprüche

1. System zum Verbinden von Stützen-Elementen (2) mit dem Haupt-Schaft (1) eines Windturbinen-Turms, wobei:
- der Haupt-Schaft (1) aus Ringen (3) besteht;
- der Haupt-Schaft (1) einen oberen Verbindungsring (3A) und einen unteren Verbindungsring (3B) umfasst;
- jedes Stützen-Element (2) ein End-Stützteil (4) mit einem flachen Ende (5) umfasst;
- der obere Verbindungsring (3A) eine erste Umfangsfläche (6A) sowie eine erste Stützfläche (7A) umfasst, die einen Winkel (α) mit der ersten Umfangsfläche (6A) bildet; und
- der untere Verbindungsring (3B) eine zweite Umfangsfläche (6B) und eine zweite Stützfläche (7B) umfasst, die parallel zu der ersten Stützfläche (7A) des oberen Verbindungsrings (3A) ist und mit der zweiten Umfangsfläche (6B) einen Winkel (α) bildet, dessen Wert identisch zu dem des Winkels (α) der ersten Stützfläche (7A) mit der ersten Umfangsfläche (6A) ist, so dass das flache Ende (5) jedes Stützen-Elementes (2) zwischen der ersten Stützfläche (7A) des oberen Verbindungsrings (3A) und der zweiten Stützfläche (7B) des unteren Verbindungsrings (3B) befestigt ist, und wobei der Winkel (α) einen Wert zwischen 60° und 120° hat;
- die zweite Stützfläche (7B) des unteren Verbindungsrings (3B) ein erstes Durchgangsloch (11B) umfasst und das flache Ende (5) des Stützen-Elementes (2) ein erstes Durchgangsloch (11C) umfasst, wobei die ersten Durchgangslöcher (11B, 11C) einen ersten Bolzen (10) aufnehmen, der das flache Ende (5) des Stützen-Elementes (2) mit dem unteren Verbindungsring (3B) verbindet;
- die erste Stützfläche (7A) des oberen Rings (3A) ein zweites Durchgangsloch (13A) umfasst, das flache Ende (5) des Stützen-Elementes (2) ein zweites Durchgangsloch (13C) umfasst und der untere Verbindungsring (3B) ein zweites Durchgangsloch (13B) umfasst, wobei die zweiten Durchgangslöcher (13A, 13B, 13C) einen zweiten Bolzen (12) aufnehmen, der den oberen Verbindungsring (3A) mit dem unteren Verbindungsring (3B) verbindet, wobei sich das flache Ende (5) des Stützen-Elementes (2) zwischen den zwei Verbindungsringen (3A, 3B) befindet;
**dadurch gekennzeichnet, dass**:
- die ersten Durchgangslöcher (11B, 11C) innerhalb des Umfangs sowohl der ersten Umfangsfläche (6A) als auch der zweiten Umfangsfläche (6B) angeordnet sind; und
- die zweiten Durchgangslöcher (13A, 13B, 13C) innerhalb des Umfangs sowohl der ersten Umfangsfläche (6A) als auch der zweiten Umfangsfläche (6B) angeordnet sind.

2. System zum Verbinden von Stützen-Elementen (2) mit dem Haupt-Schaft (1) eines Windturbinen-Turms nach Anspruch 1, **dadurch gekennzeichnet, dass** die erste Stützfläche (7A) des oberen Rings (3A) einen Umfangsvorsprung (8) umfasst.

3. System zum Verbinden von Stützen-Elementen (2) mit dem Haupt-Schaft (1) eines Windturbinen-Turms nach einem der vorangehenden Ansprüche, **dadurch gekennzeichnet, dass** das End-Stützteil (4) der Stützen-Elemente (2) so ausgeführt ist, dass es die Ausrichtung des Stützen-Elementes (2) ändert, bis das flache Ende (5) parallel zu den Stützflächen (7A, 7B) des oberen (3A) und unteren (3B) Verbindungsrings ist.

4. System zum Verbinden von Stützen-Elementen (2) mit dem Haupt-Schaft (1) eines Windturbinen-Turms nach Anspruch 1, **dadurch gekennzeichnet, dass** das flache Ende (5) jedes Stützen-Elementes (2) eine Aussparung (14) zum Aufnehmen eines Endes des ersten Bolzens (10) umfasst.

5. System zum Verbinden von Stützen-Elementen (2) mit dem Haupt-Schaft (1) eines Windturbinen-Turms nach einem der vorangehenden Ansprüche, **dadurch gekennzeichnet, dass** es komplementäre Teile (9) umfasst, die zwischen dem oberen Verbindungsring (3A) und dem unteren Verbindungsring (3B) in Hohlräumen zwischen den flachen Enden (5) der Stützen-Elemente (2) angeordnet sind.

6. System zum Verbinden von Stützen-Elementen (2) mit dem Haupt-Schaft (1) eines Windturbinen-Turms nach Anspruch 5, **dadurch gekennzeichnet, dass** jedes komplementäre Teil (9) umfasst:
- ein erstes Durchgangsloch (9A), das zum Aufnehmen eines ersten Bolzens (10) ausgeführt ist, der das komplementäre Teil (9) mit dem unteren Ring (3B) verbindet; und
- ein zweites Durchgangsloch (9B), das zum Aufnehmen eines zweiten Bolzens (12) ausgeführt ist, der den oberen Ring (3A) mit dem unteren Ring (3B) verbindet, wobei sich ein komplementäres Teil (9) zwischen den Ringen (3A, 3B) befindet.

7. System zum Verbinden von Stützen-Elementen (2) mit dem Haupt-Schaft (1) eines Windturbinen-Turms nach einem der Ansprüche 1 bis 6, **dadurch gekennzeichnet, dass**
- die Stützen-Elemente (2) ein Bogenstück (15) umfassen, das so ausgeführt ist, dass es die Ausrichtung des Stützen-Elementes (2) von einer Position parallel zu dem Haupt-Schaft (1) zu einer Position ändert, in der ein Endabschnitt des Stützen-Elementes (2) an einem Ende mit dem Haupt-Schaft (1) verbunden ist,
- es wenigstens ein Zwischen-Verbindungselement (17A, 17B) umfasst, das in dem Haupt-Schaft (1) angeordnet und so ausgeführt ist, dass es die Stützen-Elemente (2) mittels wenigstens einer Strebe (16) pro Stützen-Element (2) mit dem Haupt-Schaft (1) verbindet; wobei die Stützen-Elemente (2) mit dem Haupt-Schaft (1) mittels der Streben (16) verbunden sind, die die Bogenstücke (15) mit dem wenigstens einen Zwischen-Verbindungselement (17A, 17B) verbinden.

8. System zum Verbinden von Stützen-Elementen (2) mit dem Haupt-Schaft (1) eines Windturbinen-Turms nach Anspruch 7, **dadurch gekennzeichnet, dass** das Bogenstück (15) umfasst:
- einen oberen Ring (25) zum Verbinden des Endabschnitts des Stützen-Elementes (2),
- eine Versteifung (24) im Inneren desselben, sowie
- eine äußere Platte (22), die entsprechend der Versteifung (24) so angeordnet ist,
- dass die äußere Platte (22) die Streben (16) aufnimmt.

9. System zum Verbinden von Stützen-Elementen (2) mit dem Haupt-Schaft (1) eines Windturbinen-Turms nach Anspruch 8, **dadurch gekennzeichnet, dass** die Streben (16) einen Haupt-Träger (18) und zwei Verstärkungs-Träger (19) umfassen.

10. System zum Verbinden von Stützen-Elementen (2) mit dem Haupt-Schaft (1) eines Windturbinen-Turms nach Anspruch 9, **dadurch gekennzeichnet, dass** der Haupt-Träger (18) umfasst:
- ein erstes flaches Ende (20), das zum Befestigen an dem Bogenstück (15) ausgeführt ist; sowie
- ein zweites Ende, das einen Umfangsabschnitt (21) umfasst, der mit dem wenigstens einen Zwischen-Verbindungselement (17A, 17B) verbunden ist.

11. System zum Verbinden von Stützen-Elementen (2) mit dem Haupt-Schaft (1) eines Windturbinen-Turms nach den Ansprüchen 6-10, **dadurch gekennzeichnet, dass** es zwei Befestigungsplatten (23) umfasst, die sowohl die äußere Platte (22) des Bogenstücks (15) als auch das flache Ende (20) des Haupt-Trägers (18) abdecken.

12. Windturbinen-Turm, der einen Haupt-Schaft (1) sowie eine Vielzahl von Stützen-Elementen (2) umfasst, **dadurch gekennzeichnet, dass** er das System zum Verbinden von Stützen-Elementen (2) mit dem Haupt-Schaft (1) nach einem der vorangehenden Ansprüche umfasst.

## Revendications

1. Système pour joindre des éléments de contrefort (2) à la colonne principale (1) d'une tour de turbine éolienne, dans lequel :
- la colonne principale (1) est faite de cylindres (3) ;
- la colonne principale (1) comprend un cylindre de jonction supérieur (3A) et un cylindre de jonction inférieur (3B) ;
- chaque élément de contrefort (2) comprend une pièce de support d'extrémité (4) avec une extrémité plate (5) ;
- le cylindre de jonction supérieur (3A) comprend une première surface périphérique (6A) et une première surface de support (7A) qui forme un angle (α) avec la première surface périphérique (6A) ; et
- le cylindre de jonction inférieur (3B) comprend une seconde surface périphérique (6B) et une seconde surface de support (7B) parallèle à la première surface de support (7A) du cylindre de jonction supérieur (3A) de telle manière qu'elle forme un angle (α) avec la seconde surface périphérique (6B) de valeur identique à l'angle (α) de la première surface de support (7A) avec la première surface périphérique (6A) ; de telle manière que l'extrémité plate (5) de chaque élément de contrefort (2) est fixée entre la première surface de support (7A) du cylindre de jonction supérieur (3A) et la seconde surface de support (7B) du cylindre de jonction inférieur (3B), et dans lequel l'angle (α) a une valeur comprise entre 60° et 120° ;
- la seconde surface de support (7B) du cylindre de jonction inférieur (3B) comprenant un premier trou traversant (11B) et l'extrémité plate (5) de l'élément de contrefort (2) comprend un premier trou traversant (11C) dans lequel les premiers trous traversant (11B, 11C) accueillent un premier boulon (10) qui joint l'extrémité plate (5) de l'élément de contrefort (2) au cylindre de jonction inférieur (3B) ;
- la première surface de support (7A) du cylindre supérieur (3A) comprenant un second trou traversant (13A), l'extrémité plate (5) de l'élément de contrefort (2) comprend un second trou traversant (13C) et le cylindre de jonction inférieur (3B) comprend un second trou traversant (13B), dans lequel les seconds trous traversant (13A, 13B, 13C) accueillent un second boulon (12) qui joint le cylindre de jonction supérieur (3A) au cylindre de jonction inférieur (3B) avec l'extrémité plate (5) de l'élément de contrefort (2) entre les deux cylindres de jonction (3A; 3B) ;
**caractérisé en ce que** :
- les premiers trous traversant (11B, 11C) étant situés à l'intérieur du périmètre d'à la fois la première surface périphérique (6A) et la seconde surface périphérique (6B) ; et
- les seconds trous traversant (13A, 13B, 13C) étant situés à l'intérieur du périmètre d'à la fois la première surface périphérique (6A) et la seconde surface périphérique (6B).

2. Système pour joindre des éléments de contrefort (2) à la colonne principale (1) d'une tour de turbine éolienne, selon la revendication 1, **caractérisé en ce que** la première surface de support (7A) du cylindre supérieur (3A) comprend une saillie périphérique (8).

3. Système pour joindre des éléments de contrefort (2) à la colonne principale (1) d'une tour de turbine éolienne, selon l'une quelconque des revendications précédentes, **caractérisé en ce que** la pièce de support d'extrémité (4) des éléments de contrefort (2) est configurée pour changer l'orientation de l'élément de contrefort (2) jusqu'à ce que l'extrémité plate (5) soit parallèle aux surfaces de support (7A, 7B) des cylindres de connexion supérieure (3A) et inférieur (3B).

4. Système pour joindre des éléments de contrefort (2) à la colonne principale (1) d'une tour de turbine éolienne, selon la revendication 1, **caractérisé en ce que** l'extrémité plate (5) de chaque élément de contrefort (2) comprend un évidement (14) pour accueillir une extrémité du premier boulon (10).

5. Système pour joindre des éléments de contrefort (2) à la colonne principale (1) d'une tour de turbine éolienne, selon l'une quelconque des revendications précédentes, **caractérisé en ce qu'**il comprend des pièces complémentaires (9) situées entre le cylindre de jonction supérieur (3A) et le cylindre de jonction inférieur (3B) dans des espaces creux entre les extrémité plates (5) des éléments de contrefort (2).

6. Système pour joindre des éléments de contrefort (2) à la colonne principale (1) d'une tour de turbine éolienne, selon la revendication 5, **caractérisé en ce que** chaque pièce complémentaire (9) comprend :
- un premier trou traversant (9A) configuré pour accueillir un premier boulon (10) qui joint la pièce complémentaire (9) au cylindre inférieur (3B) ; et
- un second trou traversant (9B) configuré pour accueillir un second boulon (12) qui joint le cylindre supérieur (3A) au cylindre inférieur (3B) avec une pièce complémentaire (9) entre lesdits cylindres (3A, 3B).

7. Système pour joindre des éléments de contrefort (2) à la colonne principale (1) d'une tour de turbine éolienne, selon l'une quelconque des revendications 1 à 6, **caractérisé en ce que** :
- les éléments de contrefort (2) comprennent un coude (15) configuré pour changer l'orientation de l'élément de contrefort (2) d'une position parallèle à la colonne principale (1) à une position dans laquelle une section d'extrémité de l'élément de contrefort (2) est jointe à une extrémité de la colonne principale (1),
- il comprend au moins un élément de jonction intermédiaire (17A, 17B) situé dans la colonne principale (1), configuré pour joindre les éléments de contrefort (2) à la colonne principale (1) au moyen d'au moins une patte (16) par élément de contrefort (2) ; dans lequel les éléments de contrefort (2) sont joints à la colonne principale (1) au moyen des pattes (16) qui joignent les coudes (15) à l'au moins un élément de jonction intermédiaire (17A, 17B).

8. Système pour joindre des éléments de contrefort (2) à la colonne principale (1) d'une tour de turbine éolienne, selon la revendication 7, **caractérisé en ce que** le coude (15) comprend :
- une bague supérieure (25) pour jonction à la section d'extrémité de l'élément de contrefort (2),
- un raidisseur (24) à l'intérieur de celui-ci, et
- une plaque extérieure (22) située en correspondance avec le raidisseur (24),
- de telle manière que la plaque extérieure (22) reçoit les pattes (16).

9. Système pour joindre des éléments de contrefort (2) à la colonne principale (1) d'une tour de turbine éolienne, selon la revendication 8, **caractérisé en ce que** les pattes (16) comprennent une poutre principale (18) et deux poutres de renforcement (19).

10. Système pour joindre des éléments de contrefort (2) à la colonne principale (1) d'une tour de turbine éolienne, selon la revendication 9, **caractérisé en ce que** la poutre principale (18) comprend :
- une première extrémité plate (20) configurée pour être fixée sur le coude (15) ; et,
- une seconde extrémité comprenant une section de circonférence (21), qui est jointe à l'au moins un élément de jonction intermédiaire (17A, 17B).

11. Système pour joindre des éléments de contrefort (2) à la colonne principale (1) d'une tour de turbine éolienne, selon l'une quelconque des revendications 6 à 10, **caractérisé en ce qu'**il comprend deux plaques de fixation (23) qui couvrent à la fois la plaque extérieure (22) du coude (15) et l'extrémité plate (20) de la poutre principale (18).

12. Tour de turbine éolienne comprenant une colonne principale principale (1) et une pluralité d'éléments de contrefort (2), **caractérisée en ce qu'**elle comprend le système pour joindre des éléments de contrefort (2) à la colonne principale (1) selon l'une quelconque des revendications précédentes.
